# EUROPÄISCHE PATENTSCHRIFT

(11) **EP 3 001 675 B1**
(45) Veröffentlichungstag und Bekanntmachung des Hinweises auf die Patenterteilung: **18.04.2018**
(21) Anmeldenummer: 15186511.0
(22) Anmeldetag: 23.09.2015
(51) Int. Cl.: H04N 5/225, F16P 3/14

(54) **KAMERAEINHEIT ZUM ÜBERWACHEN EINES RAUMBEREICHS**
CAMERA UNIT FOR MONITORING AN AREA OF A ROOM
UNITE DE CAMERA DESTINEE A SURVEILLER UN DOMAINE SPATIAL

(30) Priorität: 29.09.2014 DE 102014114066
(43) Veröffentlichungstag der Anmeldung: 30.03.2016
(73) Patentinhaber: Pilz GmbH & Co. KG, 73760 Ostfildern (DE)
(72) Erfinder: Barthe, Guillaume, 73760 Ostfildern (DE); Kirn, Steffen, 73760 Ostfildern (DE); Veit, Andreas, 73760 Ostfildern (DE)
(74) Vertreter: Witte, Weller & Partner Patentanwälte mbB

(56) Entgegenhaltungen:
- DE-A1-102006 050 235
- DE-A1-102007 004 724
- US-A1- 2008 303 939
- US-A1- 2009 141 161

## Beschreibung

Die vorliegende Erfindung betrifft eine Kameraeinheit zum Überwachen eines Raumbereichs, insbesondere als Teil einer mitlaufenden Schutzeinrichtung an einem bewegten Maschinenteil, mit einem Objektiv, das einen Objektivkörper aufweist, an dem zumindest ein optisches Element befestigt ist, mit einem elektronischen Bildsensor, der auf einem Bauteilträger angeordnet ist, mit einer Aperturblende, mit mindestens einer sphärischen Linse mit positiver Brechkraft, die eine Brennebene definiert, in der die Aperturblende angeordnet ist, und mit einem Koppelstück, über das der Objektivkörper und der Bauteilträger zu einer integrierten Baueinheit verbunden sind.

Die Erfindung betrifft ferner eine Vorrichtung zum Absichern einer Maschine mit einem ersten und einem zweiten Maschinenteil, wobei das erste Maschinenteil eine Arbeitsbewegung relativ zu dem zweiten Maschinenteil ausführt, insbesondere zum Absichern eines stationären Press-, Stanz- oder Schneidwerkzeuges, mit einer Lichtquelle, mit einer Kameraeinheit, und mit einer Steuereinheit, wobei die Kameraeinheit so an dem ersten Maschinenteil befestigt ist, dass sie bei der Arbeitsbewegung des ersten Maschinenteils mitgeführt wird und dabei einen vor dem ersten Maschinenteil liegenden Raumbereich aufnimmt, wobei die Lichtquelle gegenüber von der Kameraeinheit so angeordnet ist, dass sie die Kameraeinheit beleuchtet, und wobei die Steuereinheit dazu ausgebildet ist, die Arbeitsbewegung des ersten Maschinenteils in Abhängigkeit von einem von der Kameraeinheit erzeugten Signal zu stoppen.

Eine solche Kameraeinheit sowie eine entsprechende Vorrichtung sind aus DE 10 2007 004 724 A1 bekannt.

DE 10 2007 004 724 A1 beschreibt insbesondere ein Sensorsystem als mitlaufende Schutzeinrichtung für eine Biegepresse. Das System weist eine Lichtquelle und eine Kameraeinheit auf, die dazu ausgebildet sind, seitlich rechts bzw. links an einem Presswerkzeug der Biegepresse angeordnet zu werden, so dass sie bei einer Arbeitsbewegung des Presswerkzeuges mitgeführt werden. Die mitlaufende Lichtquelle erzeugt einen Lichtstrahl, der parallel zu der vorlaufenden Kante des Presswerkzeugs verläuft und auf die ebenfalls mitlaufende Kameraeinheit am gegenüberliegenden Ende ausgerichtet ist. Die Kameraeinheit empfängt den Lichtstrahl und kann auf diese Weise den Raumbereich unmittelbar vor der vorlaufenden Kante des Presswerkzeuges überwachen. Ein Eingriff in den überwachten Raumbereich während der Arbeitsbewegung des Presswerkzeuges wird detektiert und führt typischerweise zum Anhalten der Arbeitsbewegung, insbesondere indem die Biegepresse stromlos geschaltet wird.

Darüber hinaus ist in der DE 10 2007 004 724 A1 der mechanische Aufbau einer entsprechenden Kameraeinheit beschrieben. Die Kameraeinheit beinhaltet ein Objektiv mit einem Objektivkörper und einen elektronischen Bildsensor, der auf einem Bauteilträger angeordnet ist. Über ein Koppelstück sind der Objektivkörper und der Bauteilträger zu einer integrierten Baueinheit verbunden. Das Koppelstück ist darüber hinaus mit zwei Beweglichkeiten ausgestattet, die es ermöglichen, das Koppelstück einerseits relativ zu dem Objektivkörper und anderseits relativ zu dem Bauteilträger zu bewegen. Über zwei lösbare Spannmechanismen lassen sich die beiden Beweglichkeiten unabhängig voneinander freigeben oder blockieren. Dies ermöglicht eine sehr genaue Justierung des Bildsensors relativ zu dem Objektiv in verschiedenen Bewegungsrichtungen.

Die gute Justierungsmöglichkeit des Bildsensors geht jedoch einher mit einer komplexen Ausgestaltung der Spannmechanismen und des Koppelstücks. Insbesondere für die Bereitstellung der zwei unabhängigen Beweglichkeiten ist ein komplexer, in der Regel mehrstückiger Aufbau des Koppelstücks notwendig. Dabei kann ein Verschleißen dieser Teile dazu führen, dass sich die Spannmechanismen bei starker Belastung, bspw. durch starke Stöße oder Vibrationen, lösen. Dies hat zur Folge, dass Detektionsfehler auftreten können und eine Nachjustierung in regelmäßigen Abständen erforderlich wird. Zudem stellt der komplexe Aufbau hohe Anforderungen an die Fertigung, wodurch wiederum die Herstellungskosten einer solchen Kameraeinheit steigen.

DE 10 2006 050 235 A1 zeigt ein Kamerasystem zum Überwachen eines Raumbereichs, insbesondere ein Stereokamerasystem mit zwei oder mehreren Kameras mit deren Hilfe zwei zueinander versetzte Bilder aufgenommen werden, um über eine Stereobildauswertung ein dreidimensionales Abbild des betrachtet Raumbereichs zu erzeugen. DE 10 2006 050 235 A1 offenbart ein Mechanikkonzept für die einzelne Kamera, das eine kostengünstige und trotzdem zuverlässige Montage eines Stereokamerasystems ermöglicht. Dabei ist ein Objektivkörper mit integrierter Optik auf einem Trägerring geschraubt und in einem Abstand zu einem Bauteilträger, welcher einen Bildsensor beherbergt, gelagert. Über eine Kontermutter kann der Objektivkörper hinsichtlich des Abstands zum Bauteilträger justiert werden. Die Anordnung wird anschließend mit einem am Objektivköper angeordneten Montageflansch und einem Klemmstück an einem Systemträger fixiert. Einzelne Kameraeinheiten können dadurch ohne zusätzlichen Montageaufwand sehr präzise zueinander ausgerichtet werden.

US 2008/0303939 A1 offenbart eine Handykamera mit einem Objektiv sowie ein Mechanikkonzept zum Ausrichtung eines Linsenmoduls in Bezug auf einen Bildsensor, um einen möglichst kompakten Aufbau des Objektivs zu gewährleisten.

US 2009/0141161 A1 offenbart eine weitere Bildaufnahmeeinheit für ein elektronisches Gerät, wie beispielsweise eine Handykamera mit einem teilweise starren Objektivkörper.

Somit ist es grundsätzlich wünschenswert, eine einfachere, verschleißfreie Kameraeinheit bereitzustellen, die einfach und schnell montiert werden kann, ohne dass eine aufwendige Justierung notwendig ist bzw. eine regelmäßige Nachjustierung erforderlich wird.

Vor diesem Hintergrund ist es eine Aufgabe der vorliegenden Erfindung eine alternative Kameraeinheit anzugeben, die schnell und einfach montiert werden kann, günstig in der Herstellung ist, und gleichzeitig eine hohe Präzision beim Aufbau des optischen Systems bereitstellt.

Gemäß einem Aspekt der Erfindung wird diese Aufgabe durch eine Kameraeinheit eingangs genannter Art gelöst, bei der der Bauteilträger eine in einer Ebene liegende Oberfläche aufweist, auf der der elektronische Bildsensor angeordnet ist, das Koppelstück einen einstückigen Korpus aufweist, der den Objektivkörper und den Bauteilträger in einer definierten Position relativ zueinander zu der integrierten Baueinheit verbindet, und wobei der Korpus zumindest abschnittsweise starr auf der Oberfläche des Bauteilträgers aufliegt und eine Senke aufweist, an deren Grund die Aperturblende, vorzugweise zentral, angeordnet ist, so dass die Aperturblende justierungsfrei in einem definierten Abstand relativ zu dem elektronischen Bildsensor fixiert ist.

Bei der neuen Kameraeinheit ist somit die Aperturblende als ein wesentlicher Bestandteil des optischen Systems der Kameraeinheit fest in das Koppelstück integriert oder zumindest von diesem direkt an dem Bauteilträger fixiert. Das Koppelstück ist aus einem Stück gefertigt und bewegungslos mit dem Bauteilträger verbunden. Indem die Aperturblende ein integrierter Bestandteil der Verbindung oder gar des Koppelstücks ist, ist eine separate Justierung des Bildsensors relativ zur Aperturblende entbehrlich, wenn das Koppelstück starr mit dem Bauteilträger verbunden ist. Mit anderen Worten ist die Ausrichtung der Aperturblende zum Bildsensor vorteilhafterweise nur von den Fertigungstoleranzen des Koppelstücks, der Aperturblende selbst und des Bauteilträgers abhängig. So kann eine hohe Präzision des optischen Systems erreicht werden.

Durch die besondere Lage der Aperturblende sammelt das Objektiv vom abzubildenden Objekt nur Strahlenbündel, deren baryzentrischer Strahl parallel zur optomechanischen Hauptachse verläuft. Die einfallenden Strahlen treffen auf die Eintrittspupille, die so erscheint, als sei sie virtuell im Unendlichen platziert. Besonders vorteilhaft bleibt in dieser Ausgestaltung die Bildgröße bei der Verschiebung eines Objekts nahezu unverändert, vorausgesetzt, das zu inspizierende Objekt befindet sich innerhalb des vorgegebenen Bereichs, der oft als Schärfentiefe bezeichnet wird. Insbesondere für Messanwendungen, ist eine derartige Ausgestaltung vorteilhaft, da keine Veränderung der Vergrößerung durch eine Objektverschiebung eintritt, perspektivische Fehler ausgeglichen werden und Objektränder somit sicher lokalisiert werden können.

Die integrierte Baueinheit der neuen Kameraeinheit setzt sich maßgeblich aus drei Komponenten zusammen, die ohne individuelle Justierung direktzusammengefügt werden können, nämlich dem Objektiv inklusive Objektivkörper und Linsenelemente, dem Koppelstück inklusive Aperturblende und dem bauteilträger inklusive dem Bildsensor. Zudem ist das Fixieren der einzelnen Komponente mit einfachen Mittel, bspw. mit einer Schraub- oder Steckverbindung, möglich, wodurch der Aufbau weiter vereinfacht wird. Die geringe Anzahl an Komponenten und der einfache Aufbau ermöglichen eine kostengünstige Montage und geringe Herstellungskosten.

Darüber hinaus ist die neue Kameraeinheit besonders robust gegenüber starken Erschütterungen und Vibrationen, da konstruktionsbedingt keine Beweglichkeiten zwischen den einzelnen Teilen vorgesehen sind. Insbesondere ist der Aufbau verschfeißfrei und bedarf keiner Nachjustierung.

Durch die Positionierung in einer Senke kann die Aperturblende besonders gut in dem Koppelstück integriert und in einem definierten Abstand zum Bildsensor

fixiert werden. Die Aperturblende ist durch die Seitenwände der Senke geschützt im Inneren des Koppelstücks angeordnet. Über eine zentrale Anordnung in einer vorzugsweise kreisrunden Senke wird eine besonders einfache Positionierung der Blende im Bezug auf den Bildsensor ermöglicht. Die oben genannte Aufgabe ist daher vollständig gelöst.

In einer weiteren Ausgestaltung weist der Bauteilträger ein Keramiksubstrat auf, welches eine glatte Oberfläche bildet, auf der der Bildsensor angeordnet ist.

Diese Ausgestaltung ist in zweierlei Weise vorteilhaft. Einerseits ist ein Keramiksubstrat besonders stabil und unempfindlich gegenüber Temperaturschwankungen, so dass der Korpus des Koppelstücks sehr präzise auf dem Keramiksubstrat ausgerichtet werden kann. Andererseits ist ein Keramiksubstrat ein sehr guter Isolator, wodurch der Bildsensor elektrisch isoliert von der Aperturblende und dem Koppelstück angeordnet werden kann. Besonders vorteilhaft ist der Abstand zwischen Bildsensor und dem Koppelstück so gewählt, dass ein Spannungsüberschlag aufgrund einer statischen Aufladung des Gehäuses, welches mit dem Objektivkörper und dem Koppelstück verbunden ist, ausgeschlossen werden kann.

In einer weiteren Ausgestaltung weist der einstückige Korpus zumindest einen ersten und einen zweiten Passzapfen und die Oberfläche des Bauteilträgers eine erste Öffnung und eine zweite Öffnung auf, wobei der erste Passzapfen in die erste Öffnung eingreift und der zweite Passzapfen in die zweite Öffnung eingreift.

Diese Ausgestaltung ermöglicht eine einfache und kostengünstige Montage in Verbindung mit einer hohen Positionierungsgenauigkeit des Bildsensors relativ zu dem Objektiv. Außerdem ergibt diese Ausgestaltung einen sehr robusten und erschütterungsfesten Aufbau.

In einer weiteren Ausgestaltung ist der Bildsensor ohne Sensorgehäuse direkt auf dem Bauteilträger angeordnet. Vorzugsweise ist der Bildsensor ein Halbleiterchip, der direkt auf den Bauteilträger geklebt ist.

Diese Ausgestaltung ermöglicht eine besonders hohe Genauigkeit beim Ausrichten des Bildsensors relativ zu dem Objektiv, weil Montagetoleranzen eliminiert werden, die sich zwangsläufig ergeben, wenn ein Halbleiterchip in einem eigenen Chipgehäuse untergebracht ist, wie etwa einem PGA oder SPGA-Gehäuse.

In einer weiteren Ausgestaltung weist die Kameraeinheit zusätzlich eine Dichtung auf, die zusammen mit dem Koppelstück und dem Bauteilträger den Bildsensor staubdicht umhäust.

In dieser Ausgestaltung kann der Bildsensor besonders gut vor Verschmutzung und mechanischen Beschädigungen geschützt werden, wodurch kostengünstig ein zusätzlicher Schutz ermöglicht wird. Das Risiko einer Fehldetektion des Bildsensors aufgrund von Verschmutzung kann so vermindert bzw. ganz ausgeschlossen werden.

In einer weiteren Ausgestaltung weist die Kamera ein Glaselement auf, welches in einem lichten Raum zwischen Koppelstück und Bildsensor angeordnet ist.

Diese Ausgestaltung ermöglicht einen besonders robusten Aufbau, in dem ein Glaselement zwischen der Aperturblende und dem Bildsensor angeordnet wird. Das Glaselement stellt ein Medium mit präzisen optischen Eigenschaften für das optische System dar und sorgt somit für eine besonders gute Abbildungseigenschaft. Vorzugsweise füllt das Glaselement den Zwischenraum zwischen der Aperturblende und dem Bildsensor vollständig aus.

In einer weiteren Ausgestaltung weist das Glaselement die Aperturblende auf.

Die Ausgestaltung ermöglicht eine besonders präzise Fertigung der Aperturblende, insbesondere in Form einer Lochblende. Vorzugsweise wird das Glaselement mit einer Beschichtung überzogen, in die mittels eines Lasers, eine Lochblende eingearbeitet wird. Ein Koppelstück mit einer festverbundenen Aperturblende lässt sich so besonders leicht realisieren.

In einer weiteren Ausgestaltung ist das Glaselement starr mit dem Koppelstück verbunden und liegt vorzugsweise vollflächig auf dem Bildsensor auf.

In dieser Ausgestaltung liegt das Glaselement auf der Oberfläche des Bildsensors auf. Die Oberfläche weist eine aktive Sensorfläche sowie ein davon getrennten Bereich für Bondpads auf, wobei das Glaselement vorzugsweise die gesamte aktive Sensorfläche bedeckt. In dieser Ausgestaltung können die Abbildungseigenschaften besonders präzise bestimmt werden, da der für die Optik aktive Zwischenraum zwischen Blende und Bildsensor mit einem einzelnen Medium ausgefüllt ist, welches sich präzise fertigen lässt und dessen optische Eigenschaften bekannt sind. Darüber hinaus ermöglicht diese Ausgestaltung einen besonders robusten Aufbau, wobei insbesondere der die aktive Sensorfläche des Bildsensors vor Schäden geschützt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig.1: eine vereinfachte Darstellung einer Biegepresse mit einer Schutzvorrichtung, die eine Kameraeinheit nach einem bevorzugten Ausführungsbeispiel der Erfindung beinhaltet,
- Fig. 2: eine perspektivische Darstellung eines bevorzugten Ausführungsbeispiels der neuen Kameraeinheit in einem demontierten Zustand,
- Fig. 3: eine Querschnittsdarstellung des bevorzugten Ausführungsbeispiels der neuen Kameraeinheit gemäß Fig. 2 in einem montierten Zustand,
- Fig. 4: eine explosionsartige Darstellung eines bevorzugten Ausführungsbeispiels einer Sensorbaugruppe der neuen Kameraeinheit,
- Fig. 5: eine weitere explosionsartige Darstellung eines bevorzugten Ausführungsbeispiels einer Sensorbaugruppe der neuen Kameraeinheit aus einer weiteren Perspektive,
- Fig. 6: eine Querschnittsdarstellung der Sensorbaugruppe gemäß dem Ausführungsbeispiel nach Fig.4 oder 5 einschließlich einer vergrößerten Darstellung eines relevanten Ausschnitts, und
- Fig. 7: ein weiteres bevorzugtes Ausführungsbeispiel einer Sensorbaugruppe der neuen Kameraeinheit.

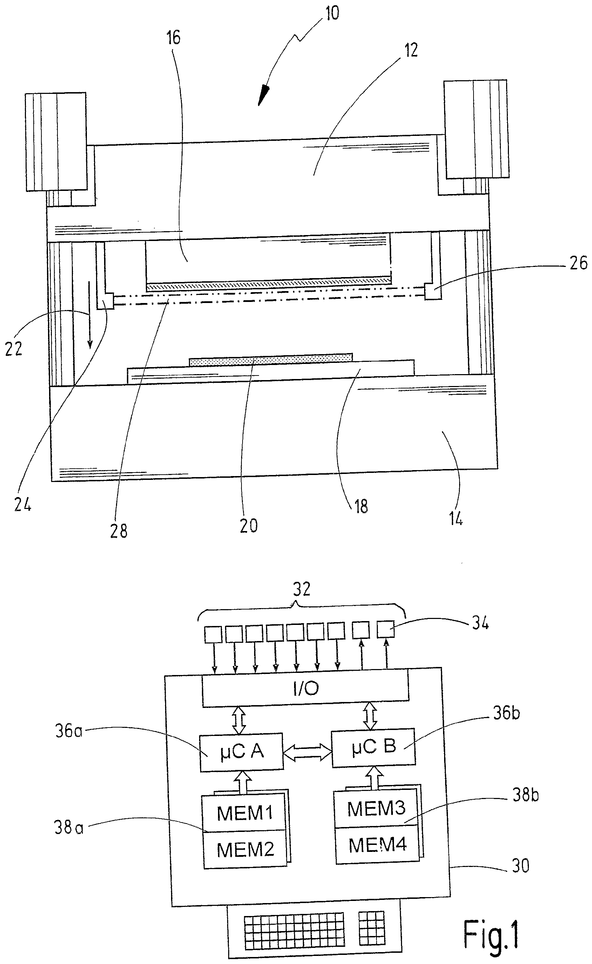

In Fig. 1 ist eine Biegepresse mit einer Schutzvorrichtung, in der eine Kameraeinheit nach einem bevorzugten Ausführungsbeispiel der Erfindung als bildgebender Sensor verwendet wird, in der Gesamtheit mit der Bezugsziffer 10 bezeichnet. Die Biegepresse besitzt ein erstes Maschinenteil 12 und ein zweites Maschinenteil 14, die in der Lage sind, eine Arbeitsbewegung relativ zueinander auszuführen. Typischerweise ist das untere Maschinenteil 14 feststehend, während das obere Maschinenteil 12 vertikal beweglich ist. Grundsätzlich könnte jedoch auch das untere Maschinenteil 14 beweglich sein.

Des Weiteren ist die vorliegende Erfindung nicht auf Kameraeinheiten zum Absichern von Biegepressen beschränkt. Wenngleich es sich um ein bevorzugtes Anwendungsgebiet handelt, kann die neue Kameraeinheit auch als bildgebender Sensor für andere Anwendungen eingesetzt werden, bei denen der gefährliche Arbeitsbereich einer automatisiert arbeitenden Maschine oder Anlage mit Hilfe eines bildgebenden Sensors abgesichert werden soll. Darüber hinaus kann die neue Kameraeinheit prinzipiell auch für andere Zwecke eingesetzt werden, beispielsweise zur Überwachung eines Raumbereichs im Rahmen einer Zugangskontrolle, oder als bildgebender Sensor in automatisierten Anlagen und Prozessen zur Qualitätssicherung.

Im vorliegenden Ausführungsbeispiel besitzt die Biegepresse 10 ein Presswerkzeug 16 (Patrize), das am oberen Maschinenteil 12 befestigt ist. Am unteren Maschinenteil 14 ist eine Matrize 18 angeordnet, auf der ein Werkstück 20 liegt. Das Presswerkzeug 16 kann in Richtung des Pfeils 22 nach unten bewegt werden und in die Matrize 18 eintauchen, um das Werkstück 20 zu verformen.

Mit der Bezugsziffer 24 ist eine Lichtquelle bezeichnet. Mit der Bezugsziffer 26 ist eine Kameraeinheit gemäß einem bevorzugten Ausführungsbeispiel der Erfindung bezeichnet. Die Lichtquelle 24 und die Kameraeinheit 26 sind seitlich von dem Presswerkzeug 16 am oberen Maschinenteil 12 befestigt, so dass sie der Arbeitsbewegung des oberen Maschinenteils 12 folgen. Die Lichtquelle 24 erzeugt einen Lichtstrahl 28, der parallel zu der vorlaufenden Kante des Presswerkzeuges 16 verläuft und die Kameraeinheit 26 so beleuchtet, dass ein in der Kameraeinheit 26 angeordneter Bildsensor den Lichtstrahl 28 empfangen kann, sofern er nicht durch ein in den Arbeitsbereich des Presswerkzeuges 16 hineinragendes Hindernis unterbrochen bzw. verdeckt wird. Die Lichtquelle 24 und die Kameraeinheit 26 bilden somit einen optischen Sensor, der denjenigen Raumbereich überwacht, der der vorderen Kante des Presswerkzeuges 16 vorgelagert ist. Alternativ zu einer mitlaufenden Kameraeinheit 26, kann die Kameraeinheit 26 auch am starren Unterteil der Maschine angeordnet sein und das Presswerkzeug tritt von oben in den Schutzraum ein. Mit der Bezugsziffer 30 ist eine Steuereinheit bezeichnet, die eine Vielzahl von Anschlüssen 32 besitzt. Die Steuereinheit 30 ist über die Anschlüsse 32 mit Sensoren und Aktoren der Biegepresse 10 verbunden. Insbesondere ist die Steuereinheit 30 in der Lage, über einen oder mehrere Ausgangsanschlüsse 34 ein Stoppsignal auszugeben, mit dessen Hilfe die Arbeitsbewegung 22 der Biegepresse 10 gestoppt wird. Alternativ kann die Steuereinheit 30 auch ein Bremssignal ausgeben, über das die Biegepresse 10 auf eine sichere Geschwindigkeit gebremst wird. Die Steuereinheit 30 erzeugt dieses Stopp- oder Bremssignal u. a. dann, wenn sie von der Kameraeinheit 26 ein Steuersignal erhält, das einen Eingriff in den überwachten Raumbereich signalisiert.

Die Steuereinheit 30 kann auch den Betriebsablauf der Biegepresse 10 steuern. Alternativ hierzu kann die Steuereinheit 30 eine separate Sicherheitssteuerung sein, die lediglich für die Überwachung der Sicherungsfunktionen und insbesondere für das rechtzeitige Abschalten der Arbeitsbewegung bei Auftreten einer Gefahrensituation verantwortlich ist. Im letztgenannten Fall ist es von Vorteil, wenn die Steuereinheit 30 ganz oder teilweise in der Kameraeinheit 26 integriert ist. Wie in Fig. 1 dargestellt ist, kann die Steuereinheit 30 jedoch auch separat von der Kameraeinheit 26 angeordnet sein.

Die Steuereinheit 30 besitzt hier einen ersten und einen zweiten Prozessor 36a, 36b sowie einen ersten und einen zweiten Speicher 38a, 38b. Die Prozessoren 36a, 36b und Speicher 38a, 38b symbolisieren redundante Signalverarbeitungskanäle innerhalb der Steuereinheit 30, was eine bekannte Realisierung für Sicherheitssteuerungen zum Steuern von Sicherheitsfunktionen ist. Vorteilhafterweise wird dieser mehrkanalig-redundante Aufbau auch beibehalten, wenn die Steuereinheit 30 ganz oder teilweise in der Kameraeinheit 26 integriert ist. In bevorzugten Ausführungsbeispielen ist die Kameraeinheit 26 insoweit fehlersicher realisiert, dass sie zumindest die Anforderungen der Sicherheitsanforderungsstufe SIL3 gemäß der Norm EN 61508 erfüllt bzw. einen Performance Level d gemäß der Norm EN ISO 13849-1 aufweist.

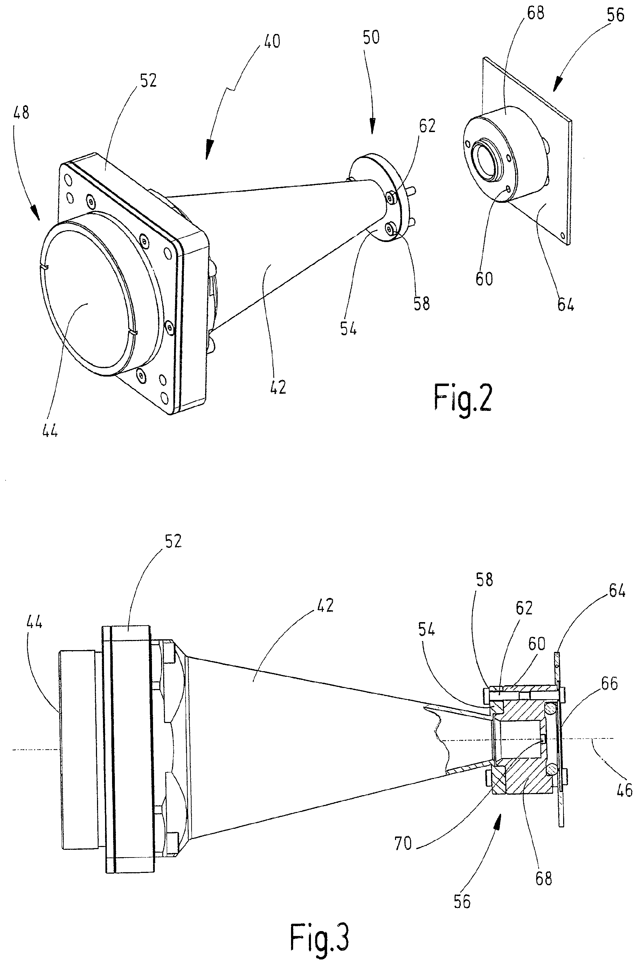

Mit Bezug auf die Fig. 2 und 3 wird im Folgenden ein bevorzugter mechanischer Aufbau für die Kameraeinheit 26 beschrieben. Gleiche Bezugszeichen bezeichnen dabei jeweils gleiche Elemente.

Die Kameraeinheit 26 besitzt ein Objektiv 40 mit einem Objektivkörper 42, in dem hier ein Linsenelement 44 angeordnet ist. Prinzipiell kann das Objektiv 40 auch mehrere Linsenelemente (hier nicht dargestellt) aufweisen. Darüber hinaus kann das Objektiv 40 grundsätzlich auch andere optische Elemente, wie etwa Spiegel oder Linsen-Spiegel-Kombinationen, enthalten. Die optische Achse des Objektivs 40 ist in Fig. 3 bei der Bezugsziffer 46 angedeutet.

Der Objektivkörper 42 ist hier konisch ausgebildet. Sein lichter Innendurchmesser verjüngt sich vom vorderen Ende 48 zum hinteren Ende 50 hin. Am vorderen Ende 48 ist der Objektivkörper 42 in diesem Ausführungsbeispiel in eine Halterung 52 eingefasst. Mittels der Halterung 52 kann das Objektiv in einem Kameragehäuse (hier nicht dargestellt) befestigt werden.

Am hinteren Ende 50 des Objektivkörpers 42 ist in diesem Ausführungsbeispiel ein Montageflansch 54 angeordnet, über den eine Sensorbaugruppe 56 an den Objektivkörper 42 gekoppelt werden kann. Für die Befestigung des Objektivkörpers 42 mit der Sensorbaugruppe 56 sind am Montageflansch 54 Bohrungen 58 vorgesehen sowie übereinstimmenden Bohrungen 60 an der Sensorbaugruppe 56. Die Bohrungen 60 an der Sensorbaugruppe 56 weisen hier je ein Innengewinde auf. Über Schrauben 62, die am Montageflansch 54 anliegen und durch die Bohrung 58 in die Bohrungen 60 an der Sensorbaugruppe 56 eingreifen, ist die Sensorbaugruppe 56 lösbar mit dem Objektivkörper 42 verbunden.

In der Fig. 2 ist die Sensorbaugruppe 56 gelöst von dem Objektivkörper 42 dargestellt, während die Fig. 3 die Sensorbaugruppe 56 und den Objektivkörper 42 in einem montierten Zustand zeigt. Es versteht sich, dass diese Kopplung nur eine Möglichkeit darstellt, den Objektivkörper 42 mit der Sensorbaugruppe 56 zu verbinden. Alternativ wäre bspw. auch eine Steckverbindung denkbar.

Die mehrteilige Sensorbaugruppe 56 beinhaltet im Wesentlichen einen Bauteilträger 64, auf dem ein Bildsensor 66 angeordnet ist und ein Koppelstück 68, welches den Bauteilträger 64 mit dem Objektivkörper 22 verbindet. Fest mit dem Koppelstück verbunden ist hier eine integrierte Aperturblende 70, die einen wesentlichen Bestandteil des optischen Systems der Kameraeinheit darstellt. Die Aperturblende ist definitionsgemäß diejenige Blende des optischen Systems, die dessen Apertur (Öffnungsweite) begrenzt. Darüber hinaus kann das optische System weitere Blenden besitzen, insbesondere Feldblenden, die für die vorliegende Betrachtung aber von untergeordneter Bedeutung sind. Vorzugsweise ist die Aperturblende in allen Ausführungsbeispielen nicht nur in ihrer Position relativ zu dem Bildsensor fixiert, sondern auch im Öffnungsradius starr.

Das optische System umfasst in einem bevorzugten Ausführungsbeispiel eine Sammellinse als Linsenelement 44, d.h. eine sphärische Linse mit positiver Brechkraft, die parallel einfallendes Licht in einer Brennebene sammelt. Des Weiteren sind der Objektivkörper 42 und das Koppelstück 68 so ausgebildet, dass im montierten Zustand die Aperturblende 70 in der Brennebene im Brennpunkt der Kollimatorlinse zu liegen kommt. Auf diese Weise sammelt das Objektiv 40 von einem abzubildenden Objekt nur Strahlenbündel, die parallel zur optomechanischen Achse 46 verlaufen. Mit anderen Worten werden auf dem Bildsensor 66 nur Strahlen von einem Objekt abgebildet mit einem nahezu achsenparallelen Strahlengang.

Für die Verwendung als Teil einer Schutzvorrichtung, wie sie in Fig. 1 beschrieben ist, ist eine derartige Ausgestaltung des optischen Systems besonders vorteilhaft, da von der Lichtquelle 24 nur die Lichtstrahlen 28 auf dem Bildsensor 66 abgebildet werden, die parallel zur vorlaufenden Kante des Presswerkzeuges 16 verlaufen. Die Schutzeinrichtung ist so besonders störunempfindlich gegenüber Streulicht, welches auf die Kameraeinheit trifft. Ebenso können perspektivische Effekte, die eine Veränderung der Vergrößerung bei normalen Objektiven bewirken, durch diese bevorzugte Anordnung des optischen Systems, insbesondere der Aperturblende 70, vermieden werden.

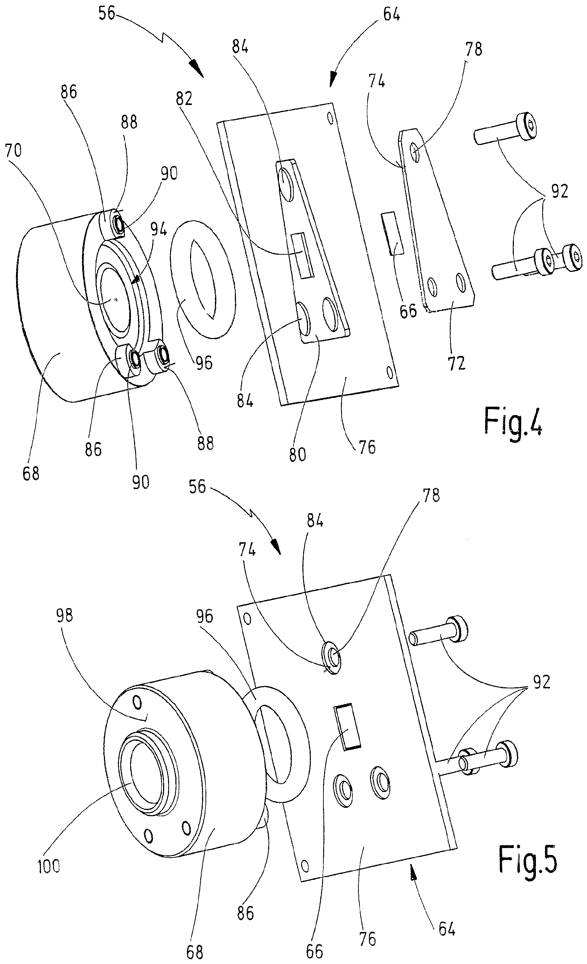

Ein bevorzugter Aufbau der Sensorbaugruppe 56 ist anhand der Fig. 4 und 5 beschrieben, die je eine Explosionsdarstellung der Sensorbaugruppe 56 aus unterschiedlichen Perspektiven zeigen. Gleiche Bezugszeichen bezeichnen auch hier jeweils gleiche Elemente.

In dem bevorzugten Ausführungsbeispiel ist der Bauteilträger 64 aus zwei Komponenten gebildet. Die erste Komponente ist ein Isolator, vorzugsweise ein Keramiksubstrat 72, welches eine hohe Festigkeit und eine sehr ebene Oberfläche 74 aufweist. Die ebene Oberfläche 74 kann beispielsweise durch ein geeignetes Schleifverfahren erzeugt werden. Alternativ könnte jedoch auch ein anderes elektrisch isolierendes Material verwendet werden. Die zweite Komponente des Bauteilträgers 64 ist eine Leiterplatte 76, auf der elektronische Bauteile (hier nicht dargestellt) zum Ansteuern und zum Auslesen des Bildsensors 66 angeordnet sind. Der Bildsensor 66 ist auf dem Isolator angeordnet und in der Regel mit diesem verklebt. Vorzugsweise wird der Bildsensor 66 mittels Bonddrähten mit der Leiterplatte 76 verbunden.

Des Weiteren könnten auf der Leiterplatte 76 auch die Prozessoren 36A, 36B und die Speicher 38A, 38B der Steuerung 30 ganz oder teilweise angeordnet sein. Alternativ oder ergänzend hierzu könnten diese Bauelemente jedoch auch auf einem weiteren Bauteilträger (hier nicht dargestellt) angeordnet sein, der über Steckverbindungen mit der Leiterplatte 76 verbunden ist.

In dem bevorzugten Ausführungsbeispiel sind die Leiterplatte 76 und das Keramiksubstrat 72 miteinander verklebt. Die Leiterplatte 76 weist hierzu eine Vertiefung 80 auf, in die das Keramiksubstrat 72 eingelegt werden kann. Vorzugsweise wird die Oberfläche 74 des Keramiksubstrats 72, auf der der Bildsensor 66 angeordnet ist, mit der Leiterplatte 76 verklebt, wobei eine Durchgangsöffnung 82 in der Leiterplatte 76 vorgesehen ist, in welcher der Bildsensor 66 zum Liegen kommt. Die Durchgangsöffnung 82 ist großzügig ausgespart, so dass ein Freiraum zwischen dem Bildsensor 66 und der Leiterplatte 76 erhalten bleibt. Der Freiraum fungiert als elektrische Isolation zwischen den beiden Teilen, so dass der Bildsensor 66 vorzugsweise ohne Sensor- bzw. Chipgehäuse direkt auf dem Keramiksubstrat 72 aufgeklebt werden kann.

Das Keramiksubstrat 72 weist ferner drei Bohrungen 78 auf, die so angeordnet sind, dass sie eine dreieckige Fläche aufspannen, wobei der Bildsensor 66 innerhalb der dreieckigen Fläche angeordnet ist. Die Bohrungen 78 dienen dazu, das Keramiksubstrat 72, die Leiterplatte 76 und das Koppelstück 68 zu verbinden und exakt auszurichten. In der Leiterplatte 76 sind hierzu fluchtend zu den Bohrungen 78 Aussparungen 84 in Form von Durchgangsöffnungen vorgesehen, durch die das Koppelstück 68 auf das Keramiksubstrat 72 zugreifen kann.

Das Koppelstück 68 weist in diesem bevorzugten Ausführungsbeispiel einen zylindrischen Korpus auf. An der Stirnseite des Korpus, die dem Bauteilträger 64 zugewandt ist, sind drei Aufnahmezapfen 86 angeordnet. Die Aufnahmezapfen 86 sind vorzugsweise einstückig aus dem Korpus des Koppelstücks 68 herausgebildet und weisen je eine Auflagefläche 88, in deren Mitte jeweils ein konischer Passzapfen 90 angeordnet ist. Ferner besitzen die Aufnahmezapfen 86 hier je eine axiale Gewindebohrung, in die eine der Schrauben 92 eingeschraubt werden kann.

Im montierten Zustand erstrecken sich die Aufnahmezapfen 86 durch die Aussparungen 84, so dass die Passzapfen in die Bohrungen 78 im Keramiksubstrat 72 eingreifen können. Die Auflageflächen 88 der Aufnahmezapfen 86, die gemeinsame in einer Ebene liegen, kommen dabei bündig auf der Oberfläche 74 des im Keramiksubstrat 72 zum Liegen. Mit anderen Worten liegen die Aufnahmeflächen 88 allesamt in einer Ebene, die im montierten Zustand identisch ist mit der Ebene, die die Oberfläche 74 des Keramiksubstrats 72 definiert. Die Passzapfen 90 ermöglichen dabei eine exakte Positionierung des Keramiksubstrats 72. Insgesamt sorgen somit die Auflageflächen 88 und Passzapfen 90 dafür, dass das Koppelstück 68 sehr exakt und sehr stabil zum Bauteilträger 64, insbesondere dem Keramiksubstrat 72 und dem Bildsensor 66, ausgerichtet ist.

Obendrein sind die Aufnahmezapfen 86 so ausgebildet, dass sie eine Höhe aufweisen, die größer ist als die Breite der Leiterplatte 76, vorzugsweise mindestens dreimal so hoch. Darüber hinaus sind die Durchgangsöffnung 82 und die Aussparungen 84 in der Leiterplatte 76 so großzügig ausgespart, dass das Koppelstück 68 im Wesentlichen nur mit dem Keramiksubstrat 72 verbunden ist. Zumindest stirnseitig ist das zylindrische Koppelstück 68 nur mit dem Keramiksubstrat 72 verbunden.

Die im Koppelstück 68 integrierte Aperturblende 70 ist in diesem bevorzugten Ausführungsbeispiel in einer Senke 94 angeordnet, die mit einem O-Ring 96 als Dichtung umschlossen ist. Der O-Ring 96 umläuft den Rand der Senke 94 und wird bei der Montage zwischen dem Koppelstück 68 und der Leiterplatte 76 eingeklemmt, so dass ein Hohlraum gebildet aus der Senke 94 und der Oberfläche der Leiterplatte 76 entsteht, in dem der Bildsensor 66 angeordnet ist. Der Bildsensor 66 ist so staubdicht verschlossen und besonders gut vor Verschmutzungen geschützt, insbesondere wenn der Bildsensor 66 ohne ein Sensorgehäuse auf dem Keramiksubstrat 72 angeordnet ist

Für die Verbindung des Objektivkörpers 42 mit dem Koppelstück ist in diesem Ausführungsbeispiel auf der dem Bauteilträger 64 abgewandten Seite des Koppelstücks 68 eine Montagefläche 98 ausgebildet, auf die der Objektivkörper 42 bündig aufgelegt werden kann. Über einen Passring 100 wird der Objektivkörper 42 zum Koppelstück 68 und der darin enthaltenen Aperturblende 70 zentriert. Der Objektivkörper 42 wird, wie zuvor beschrieben, vorzugweise mit dem Koppelstück 68 verschraubt. Alternativ kann der Objektivkörper 42 auch so ausgebildet sein, dass er in eine Öffnung in dem Koppelstück 68 einsteckbar ist.

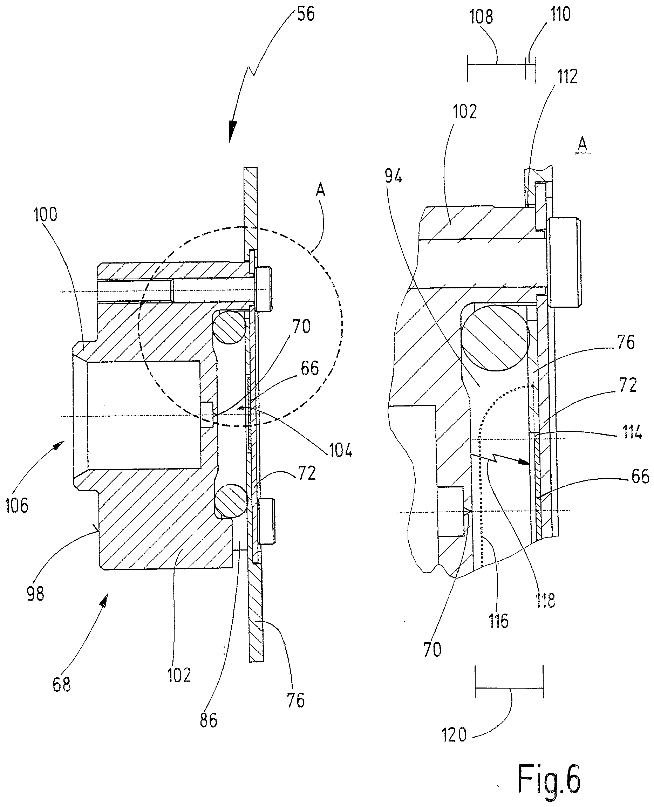

Die bevorzugte Ausgestaltung der Aperturblende sowie die bevorzugte Abmessung des Koppelstücks 68 werden mit Bezug auf die Fig. 6 im Folgenden näher erläutert.

Fig. 6 zeigt das vorherige Ausführungsbeispiel der Sensorbaugruppe 56 in einer Querschnittsdarstellung einschließlich einer Vergrößerung (A) der relevanten Teile. Gleiche Bezugszeichen bezeichnen auch hier wieder gleiche Teile.

Anhand der Querschnittsdarstellung werden insbesondere die Abmessungen der Sensorbaugruppe 56 verdeutlicht. Das Koppelstück 68 weist in diesem bevorzugten Ausführungsbeispiel einen zylindrischen Korpus 102 auf mit einer ersten und einer zweiten kreisrunden Öffnung 104, 106 in den beiden Stirnflächen. Die erste und die zweite Öffnungen 104, 106 sind im Wesentlichen zylindrische Aussparungen im zylindrischen Korpus 102 des Koppelstücks 68, die über eine punktförmige Durchgangsöffnung, die als Aperturblende 70 fungiert, verbunden sind.

In der dem Bauteilträger 64 zugewandten Stirnfläche ist der Innendurchmesser der ersten Öffnung 104 im Verhältnis zu Tiefe der Öffnung 104 groß, so dass eine flache Senke 94 mit einem schmalen ringförmigen Rand in der Stirnfläche des Koppelstücks 68 ausgebildet ist. Auf dem Rand der Senke sind die zuvor beschriebenen Aufnahmezapfen 86 angeordnet, die die Auflage für den Bauteilträger 64 bilden. Am Grund der Senke ist die Aperturblende 70 angeordnet, die als Durchgangsöffnung zwischen der ersten und der zweiten Öffnung 104, 106 im Koppelstück 68 ausgebildet ist. Die vorzugsweise punktförmige Aperturblende 70 verbindet die beiden Öffnungen 104, 106 und wird vorzugweise nachträglich mit einem Laser in das Koppelstück 68 eingearbeitet. Alternativ kann die Aperturblende bspw. auch durch einen photochemischen Prozess geätzt werden.

Die zweite Öffnung 106 in der vom Bauteilträger abgewandten Stirnfläche weist in diesem Ausführungsbeispiel einen verhältnismäßig schmalen Innendurchmesser auf, so dass ein breiter Rand mit einer möglichst großen Auflagefläche 98 für den Objektkörper 42 an der Stirnseite ausgebildet ist. Die zweite Öffnung 106 kann, wie hier gezeigt, von einer ringförmigen Wulst 100 umschlossen sein, mittels derer der Objektivkörper 42 in Bezug auf die zweite Öffnung 106 ausgerichtet werden kann. Alternativ kann ein Objektivköper 42 auch so ausgebildet sein, dass er in die zweite Öffnung 106 eingesteckt werden kann.

Mit der Bezugsziffer 108 ist in dem vergrößerten Ausschnitt eine Tiefe der Senke 94 im Koppelstück 68 bezeichnet und mit der Bezugsziffer 110 die Höhe der Aufnahmezapfen 86 gemessen vom Rand der Senke bis zur Auflagefläche 88. Zusammen definieren die beiden Größen 108, 110 den Abstand der Blende 70 zur Oberfläche des Keramiksubstrats 72, auf der der Bildsensor 66 angeordnet ist. Der Fig. 6 ist ebenfalls zu entnehmen, dass zwischen der Leiterplatte 76 und dem Bildsensor 66 ein Freiraum 112 vorgesehen ist sowie ein weiterer Freiraum 114 zwischen der Leiterplatte 76 und dem Koppelstück 68. Eine Ausrichtung des Bildsensors 66 erfolgt somit ausschließlich über die Anordnung des Koppelstücks 68 zum Keramiksubstrat 72. Auf diese Weise kann eine besonders exakte Ausrichtung erfolgen, da das Keramiksubstrat 72 im Verhältnis zur Leiterplatte 76 härter ausgebildet ist und im Wesentlichen von Temperaturschwankungen unabhängig ist. Das Koppelstück 68 und das Keramiksubstrat 72 bilden somit eine besonders starre Struktur.

Mit der Bezugsziffer 116 ist hier ferner ein Sicherheitsbereich angedeutet, der um den Bildsensor 66 ausgebildet ist, der frei von elektrischen Ladungen im Bezug auf den Bildsensor 66 ist. Der Sicherheitsbereich 116 markiert somit einen elektrischen Isolationsbereich, der dazu dient einen Spannungsüberschlag, welcher hier durch den Pfeil 118 angedeutet ist, auf den Bildsensor 66 zu vermeiden. Insbesondere das Koppelstück 68, welches mit dem Objektivträger 42 verbunden ist, welcher wiederum mit dem Gehäuse der Kameraeinheit 26 verbunden ist, sollte in einem definierten Sicherheitsabstand 120 zum Bildsensor 66 angeordnet sein, da nicht auszuschließen ist, dass sich diese Teile statisch aufladen. Die Tiefe der Senke 108 und die Höhe der Aufnahmezapfen 110 sind daher so ausgewählt, dass ein definierter Sicherheitsabstand 120 nicht unterschritten wird. So ist der Bildsensor 66 in dieser bevorzugten Ausgestaltung besonders gut isoliert und gegen Spannungsüberschläge 118 vom Koppelstück 68 auf den Bildsensor 66 geschützt.

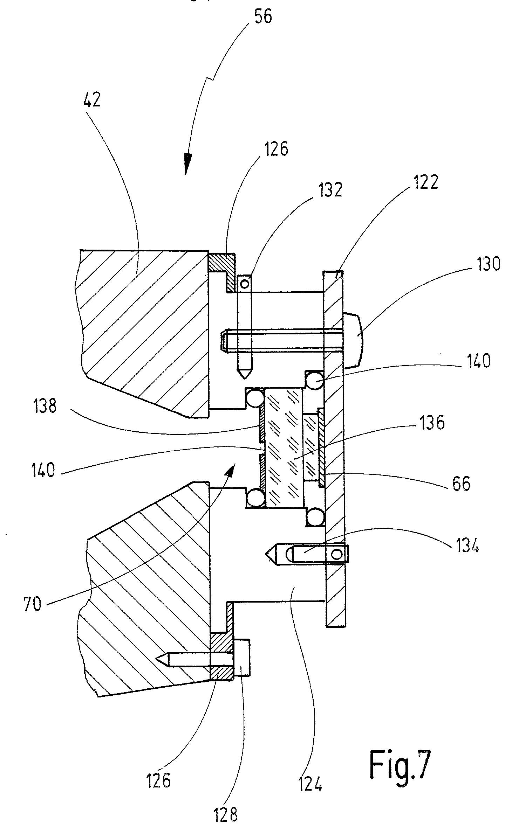

Mit Bezug auf Fig. 7 ist ein alternatives Ausführungsbeispiel für eine Sensorbaugruppe 56 gezeigt. Der Bauteilträger 64 beinhaltet hier eine einstückige Leiterplatte 122, auf der der Bildsensor 66 angeordnet ist. In diesem Ausführungsbeispiel wird somit von einer zweiteiligen Ausführung des Bauteilträgers 64 abgesehen, wobei auch hier prinzipiell eine zweiteilige Ausführung mit einem Keramiksubstrat möglich ist. Der Bauteilträger 64 ist über ein isolierendes Koppelstück 124 mit dem Objektivkörper 42 verbunden. Im Gegensatz zum vorherigen Ausführungsbeispiel ist das Koppelstück 124 hier somit selbst als elektrischer Isolator ausgebildet, um den Bildsensor 66 elektrisch vom Objektivkörper 42 zu isolieren.

Zum Befestigen des isolierenden Koppelstücks 124 am Objektivkörper 42 ist ein Klemmmechanismus vorgesehen, welcher einen Klemmring 126 und Befestigungsschrauben 128 beinhaltet. Das isolierende Koppelstück 124 weist ferner einen radial nach außen weisenden Montageflansch auf, der zwischen dem Klemmring 126 und dem Objektivkörper 42 eingeklemmt und fixiert wird. Über einen zweiten Spannmechanismus mit einem Zapfen 132 und einem Befestigungselement 130 wird die Leiterplatte 122 am Koppelstück 124 fixiert. Im vorliegenden Ausführungsbeispiel wird hierzu das Befestigungselement 130 durch die Leiterplatte 122 in eine Bohrung im Koppelstück 124 eingeführt und mittels des senkrecht dazu verlaufenden Zapfens 132 fixiert. Darüber hinaus kann über einen Zentrierstift 134, welcher durch eine Öffnung in der Leiterplatte 122 in eine entsprechende Öffnung im Koppelstück 124 gesteckt wird, die Leiterplatte 122 orientiert werden.

Des Weiteren weist die Sensorbaugruppe 56 in diesem Ausführungsbeispiel ein Glaselement 136 auf, welches in das Koppelstück 124 passgenau einlegbar ist, so dass ein Formschluss zwischen dem Glaselement 136 und dem Koppelstück 124 entsteht. Auf einer Oberfläche des Glaselements 136 ist eine dünne, lichtdichte Beschichtung 138 aufgetragen, bspw. durch aufdampfen. Ferner ist mittels eines Lasers in die lichtdichte Beschichtung 138 ein Loch 140 eingearbeitet, welches hier als Aperturblende für das optische System fungiert und fluchtend zu einer größeren Blende 70 des Koppelstück 124 angeordnet ist. Die Blende 70 des Koppelstücks 124 ist hier eine Freisparung im Koppelstück 124, die im Hinblick auf die Apertur der Kamera keine optische Funktion hat.

Das Glaselement 136 ist darüber hinaus so ausgebildet, dass es zumindest abschnittsweise flächig auf den Bildsensor 66 bündig aufliegt. Insbesondere liegt das Glaselement 136 auf einer aktiven Oberfläche des Bildsensors auf, wobei Bondpads, die ebenfalls seitlich an der Oberfläche des Bildsensors angeordnet sind, freigehalten werden. In anderen Ausführungsbeispielen kann der Bildsensor 66 auch ein rückgedünnter (back-thinned) Bildsensor seien, bei dem das Glaselement 136 vollflächig auf die Oberseite des Bildsensor geklebt werden kann, da keine Bondverbindungen bei solch einem Sensor an der Oberfläche anliegen. Über O-Ringe 142 wird der Bereich um den Bildsensor 66 staubdicht verschlossen. Auch in diesem Ausführungsbeispiel ist die Aperturblende 140 starr und justierungsfrei zum Bildsensor 66 ausgerichtet, da das Glaselement 136 starr mit der Leiterplatte 122 verbunden ist. Des Weiteren ist der Bildsensor 66 besonders gut durch das isolierende Koppelstück 124 vor Spannungsüberschlägen geschützt.

Es versteht sich, dass die vorstehend genannten Varianten nur zwei mögliche Ausführungsbeispiele der neuen Erfindung darstellen und es zahlreiche Variationsmöglichkeiten gibt. Beispielsweise könnte ein Koppelstück vollständig aus Glas gefertigt sein und so die vorstehend genannten Merkmale der Isolation und der speziellen Blendenausgestaltung in einem Element zu vereinheitlichen. Darüber hinaus können andere Spannmechanismen als die vorstehend genannten zur Verbindung der einzelnen Komponenten verwendet werden. Wesentlich ist die präzise Ausrichtung der Blende in Bezug auf den Bildsensor über ein einstückiges Koppelelement und eine ausreichende Isolierung zwischen dem Bildsensor und diesem Koppelelement.

## Patentansprüche

1. Kameraeinheit (26) zum Überwachen eines Raumbereichs, insbesondere als Teil einer mitlaufenden Schutzeinrichtung an einem bewegten Maschinenteil,
mit einem Objektiv (40), das einen Objektivkörper (42) aufweist, an dem zumindest ein optisches Element (44) befestigt ist,
mit einem elektronischen Bildsensor (66), der auf einem Bauteilträger (64) angeordnet ist,
mit einer Aperturblende (70; 140),
mit mindestens einer sphärischen Linse (44) mit positiver Brechkraft, die eine Brennebene definiert, in der die Aperturblende (70; 140) angeordnet ist, und
mit einem Koppelstück (68), über das der Objektivkörper (42) und der Bauteilträger (64) zu einer integrierten Baueinheit verbunden sind,
**dadurch gekennzeichnet, dass** der Bauteilträger (64) eine in einer Ebene liegende Oberfläche aufweist, auf der der elektronische Bildsensor (66) angeordnet ist, dass das Koppelstück (68) einen einstückigen Korpus(102) aufweist, der den Objektivkörper (42) und den Bauteilträger (64) in einer definierten Position relativ zueinander zu der integrierten Baueinheit verbindet,
wobei der einstückige Korpus (102) zumindest abschnittsweise starr auf der Oberfläche des Bauteilträgers (64) aufliegt und eine Senke (94) aufweist, an deren Grund die Aperturblende (70), vorzugweise zentral, angeordnet ist, so dass die Aperturblende (70; 140) justierungsfrei in einem definierten Abstand relativ zu dem elektronischen Bildsensor (66) fixiert ist.

2. Kameraeinheit nach Anspruch 1 , **dadurch gekennzeichnet, dass** der Bauteilträger (64) ein Keramiksubstrat (72) aufweist, welches eine ebene Oberfläche (74) bildet, auf der der Bildsensor (66) angeordnet ist.

3. Kameraeinheit nach einem der Ansprüche 1 oder 2, **dadurch gekennzeichnet, dass** der einstückige Korpus (102) zumindest einen ersten und einen zweiten Passzapfen (90) und die Oberfläche des Bauteilträgers (64) eine erste und eine zweite Öffnung (78) aufweist, wobei der erste Passzapfen in die erste Öffnung eingreift und der zweite Passzapfen in die zweite Öffnung eingreift.

4. Kameraeinheit nach einem der Ansprüche 1 bis 3, **dadurch gekennzeichnet, dass** der Bildsensor (66) ohne Sensorgehäuse direkt auf dem Bauteitträger (64) angeordnet ist.

5. Kameraeinheit nach einem der Ansprüche 1 bis 4, **gekennzeichnet durch** eine Dichtung (96), die zusammen mit dem Koppelstück (68) und dem Bauteilträger (64) den Bildsensor (66) staubdicht umhäust.

6. Kameraeinheit nach einem der Ansprüche 1 bis 5, **gekennzeichnet durch** ein Glaselement (136), welches in einem lichten Raum zwischen dem Koppelstück (68) und dem Bildsensor (66) angeordnet ist.

7. Kameraeinheit nach Anspruch 6, **dadurch gekennzeichnet, dass** das Glaselement (136) die Aperturblende (140) aufweist.

8. Kameraeinheit nach einem der Ansprüche 6 oder 7, **dadurch gekennzeichnet, dass** das Glaselement (136) formschlüssig mit dem Koppelstück (68) verbunden ist.

9. Kameraeinheit nach einem der Ansprüche 6 bis 8, **dadurch gekennzeichnet, dass** das Glaselement (136) auf dem Bildsensor (66) aufliegt, und zwar vorzugsweise vollflächig.

10. Vorrichtung zum Absichern einer Maschine (10) mit einem ersten und einem zweiten Maschinenteil (12, 14), wobei das erste Maschinenteil (12) eine Arbeitsbewegung (22) relativ zu dem zweiten Maschinenteil (14) ausführt, insbesondere zum Absichern eines stationären Press-, Stanz- oder Schneidwerkzeuges, mit einer Lichtquelle (24), mit einer Kameraeinheit (26), und mit einer Steuereinheit (30), wobei die Kameraeinheit (26) so an dem ersten Maschinenteil (12) befestigt ist, dass sie bei der Arbeitsbewegung (22) des ersten Maschinenteils (12) mitgeführt wird und dabei einen vor dem ersten Maschinenteil (12) liegenden Raumbereich (28) aufnimmt, wobei die Lichtquelle (24) gegenüber von der Kameraeinheit (26) so angeordnet ist, dass sie die Kameraeinheit (26) beleuchtet, und wobei die Steuereinheit (30) dazu ausgebildet ist, die Arbeitsbewegung (22) des ersten Maschinenteils (12) in Abhängigkeit von einem von der Kameraeinheit (26) erzeugten Signal zu stoppen, wobei die Kameraeinheit (26) nach einem der Ansprüche 1 bis 9 ausgebildet ist.

## Claims

1. A camera unit (26) for monitoring a spatial region, in particular as part of a moving protective device on a moving machine part, comprising
an objective (40) having an objective body (42) to which at least one optical element (44) is attached,
an electronic image sensor (66) which is arranged on a component support (64),
an aperture stop (70; 140),
at least one positive refractive power spherical lens (44) defining a focal plane in which the aperture stop (70;140) is arranged, and
a coupling part (68) by means of which the objective body (42) and the component support (64) are joined to form an integrated unit,
**characterized in that**
the component support (64) has a plane surface on which the electronic image sensor (66) is arranged, and **in that**
the coupling part (68) comprises a one-piece body (102) joining the objective body (42) and the component support (64) into the integrated unit in a defined position relative to each other,
wherein the one-piece body (102) rests rigidly, at least in sections, on the surface of the component support (64) and comprises a hollow (94) on the bottom of which the aperture stop (70) is located, preferably centrally, so that the aperture stop (70) is fixed without adjustment at a defined distance relative to the electronic image sensor (66).

2. The camera unit according to claim 1, **characterized in that** the component support (64) comprises a ceramic substrate (72) that forms an even surface (74) on which the image sensor (66) is arranged.

3. The camera unit according to claims 1 or 2, **characterized in that** the one-piece body (102) comprises at least a first and a second locating pin (90) and the surface of the component support (64) comprises a first and a second opening (78), wherein the first locating pin engages in the first opening and the second locating pin engages in the second opening.

4. The camera unit according to any one of claims 1 to 3, **characterized in that** the image sensor (66) is arranged directly on the component support (64) without a sensor housing.

5. The camera unit according to any one of claims 1 to 4, **characterized by** a seal (96), which together with the coupling part (68) and the component support (64) seals the image sensor (66) in a dust tight manner.

6. The camera unit according to any one of claims 1 to 5, **characterized by** a glass element (136) disposed in a clear space between the coupling part (68) and the image sensor (66).

7. The camera unit according to claim 6, **characterized in that** the glass element (136) comprises the aperture stop (140).

8. The camera unit according to claims 6 or 7, **characterized in that** the glass element (136) is connected to the coupling part (68) in a positive-locking manner.

9. The camera unit according to any one of claims 6 to 8, **characterized in that** the glass element (136) rests on the image sensor (66), preferably over the entire surface thereof.

10. An apparatus for safeguarding a machine (10) having a first and a second machine part (12, 14), wherein the first machine part (12) performs a working movement (22) relative to the second machine part (14), in particular for safeguarding a stationary pressing, stamping or cutting tool, comprising a light source (24), a camera unit (26), and a control unit (30), wherein the camera unit (26) is attached to the first machine part (12) such that it is carried along with the working movement (22) of the first machine part (12) and captures a spatial region (28) in front of the first machine part (12) during the working movement, wherein the light source (24) is arranged opposite the camera unit (26) in such a way that it illuminates the camera unit (26), and wherein the control unit (30) is configured to stop the working movement (22) of the first machine part (12) depending on a signal generated by the camera unit (26), wherein the camera unit (26) is configured according to any one of claims 1 to 9.

## Revendications

1. Unité à caméra (26) destinée à surveiller une zone d'espace, notamment sous la forme d'une partie d'un dispositif de protection accompagnant le mouvement sur une partie de machine qui se déplace,
comprenant un objectif (40), lequel possède un corps d'objectif (42) auquel est fixé au moins un élément optique (44),
comprenant un capteur d'images (66) électronique qui est disposé sur un porte-composant (64),
comprenant un diaphragme d'ouverture (70 ; 140),
comprenant au moins une lentille sphérique (44) ayant un pouvoir réfringent positif, laquelle définit un plan focal dans lequel est disposé le diaphragme d'ouverture (70 ; 140), comprenant une pièce de couplage (68) par le biais de laquelle le corps d'objectif (42) et le porte-composant (64) sont assemblés en une unité structurale intégrée,
**caractérisée en ce que** le porte-composant (64) possède une surface qui se trouve dans un plan sur lequel est disposé le capteur d'images (66) électronique, **en ce que** la pièce de couplage (68) possède un corps monobloc (102) qui assemble le corps d'objectif (42) et le porte-composant (64) en l'unité structurale intégrée dans une position définie l'un par rapport à l'autre,
le corps monobloc (102) reposant au moins dans certaines portions de manière rigide sur la surface du porte-composant (64) et possédant un creux (94) à la base duquel est disposé le diaphragme d'ouverture (70), de préférence de manière centrale, de sorte que le diaphragme d'ouverture (70 ; 140) se trouve en position fixe sans ajustement à un écart défini par rapport au capteur d'images (66) électronique.

2. Unité à caméra selon la revendication 1, **caractérisée en ce que** le porte-composant (64) possède un substrat en céramique (102) qui forme une surface plane (74) sur laquelle est disposé le capteur d'images (66).

3. Unité à caméra selon la revendication 1 ou 2, **caractérisée en ce que** le corps monobloc (102) possède au moins un premier et un deuxième tenon de positionnement (90) et a surface du porte-composant (64) au moins une première et une deuxième ouverture (78), le premier tenon de positionnement venant en prise dans la première ouverture et le deuxième tenon de positionnement venant en prise dans la deuxième ouverture.

4. Unité à caméra selon l'une des revendications 1 à 3, **caractérisée en ce que** le capteur d'images (66) et disposé directement sur le porte-composant (64) sans boîtier de capteur.

5. Unité à caméra selon l'une des revendications 1 à 4, **caractérisée par** une garniture d'étanchéité (96) qui, conjointement avec la pièce de couplage (68) et le porte-composant (64), enferme le capteur d'images (66) de manière hermétique à la poussière.

6. Unité à caméra selon l'une des revendications 1 à 5, **caractérisée par** un élément en verre (136) qui est disposé dans un espace libre entre la pièce de couplage (68) et le capteur d'images (66).

7. Unité à caméra selon la revendication 6, **caractérisée en ce que** l'élément en verre (136) possède le diaphragme d'ouverture (140).

8. Unité à caméra selon l'une des revendications 6 ou 7, **caractérisée** l'élément en verre (136) est relié par complémentarité de formes à la pièce de couplage (68).

9. Unité à caméra selon l'une des revendications 6 à 8, **caractérisée** l'élément en verre (136) repose sur le capteur d'images (66), et ce de préférence sur toute la surface.

10. Dispositif destiné à sécuriser une machine (10) comprenant une première et une deuxième partie de machine (12, 14)), la première partie de machine (12) accomplissant un mouvement de travail (22) par rapport à la deuxième partie de machine (14), notamment destiné à sécuriser un outil de pressage, d'estampage ou de découpe fixe, comprenant une source de lumière (24), comprenant une unité à caméra (26) et comprenant une unité de commande (30), l'unité à caméra (26) étant fixée à la première partie de machine (12) de telle sorte qu'elle accompagne le mouvement de la première partie de machine (12) lors du mouvement de travail (22) et enregistre à cette occasion une zone d'espace (28) qui se trouve devant la première partie de machine (12), la source de lumière (24) étant disposée en vis-à-vis devant l'unité à caméra (26) de telle sorte qu'elle éclaire l'unité à caméra (26) et l'unité de commande (30) étant configurée pour arrêter le mouvement de travail (22) de la première partie de machine (12) en fonction d'un signal généré par l'unité à caméra (26), l'unité à caméra (26) étant configurée selon l'une des revendications 1 à 9.
